# EUROPÄISCHE PATENTANMELDUNG

(11) **EP 3 531 313 A1**
(43) Veröffentlichungstag der Anmeldung: **28.08.2019**
(21) Anmeldenummer: 18158871.6
(22) Anmeldetag: 27.02.2018
(51) Int. Cl.: G06F 17/30

(54) **VERFAHREN ZUR AUTOMATISCHEN VERARBEITUNG VON KUNDENANFRAGEN UND NACH DEM VERFAHREN ARBEITENDES SYSTEM**

(71) Anmelder: Siemens Aktiengesellschaft, 80333 München (DE)
(72) Erfinder: Schlichtner, Marc, 91080 Spardorf (DE)

(57) **Zusammenfassung**

Die Erfindung ist ein Verfahren und ein nach dem Verfahren arbeitendes System (10) zur automatischen Verarbeitung einer Kundenanfrage (12), wobei die Kundenanfrage (12) in ein automatisch verarbeitbares Format konvertiert wird, wobei bekannte Lösungen und zugrunde liegende Anfragen ebenfalls in ein automatisch verarbeitbares Format konvertiert werden, und wobei zum Erhalt einer Antwort (18) auf die Kundenanfrage (12) mit der Kundenanfrage (12) in dem automatisch verarbeitbaren Format nach einer passenden Anfrage in den automatisch verarbeitbaren Formaten der bekannten Anfragen gesucht wird und bei einer Übereinstimmung oder einer ausreichenden Übereinstimmung eine zu der ermittelten bekannten Anfrage gehörige bekannte Lösung als Basis für die Antwort (18) verwendet wird.

## Beschreibung

Die Erfindung betrifft ein Verfahren zur automatischen Verarbeitung von Kundenanfragen sowie ein nach dem Verfahren arbeitendes System.

Bei der Anmelderin ergeben sich Tag für Tag mehrere Zehntausend Kundenkontakte. Kunden suchen dabei Lösungen und/oder Informationen zum Beispiel in einem im Internet erreichbaren elektronischen Forum oder wenden sich an eine Telefon-Hotline.

Die Bearbeitung solcher Anfragen ist aufwendig. Zum einen schlägt dabei der Zeitaufwand pro Anfrage zu Buche. Zum anderen ergibt sich ein erheblicher zeitlicher und personeller Aufwand einerseits im Rahmen einer Bereitstellung von Informationen, die in einem Forum der oben genannten Art zur Verfügung gestellt werden können, und/oder Informationen, auf die zum Beispiel Mitarbeiter einer Telefon-Hotline zugreifen können sowie andererseits im Rahmen der tatsächlichen Beantwortung eingehender Anfragen.

Die Kunden und auch die Mitarbeiter, die eine bei der Telefon-Hotline eingehende Anfrage bearbeiten, oder die Kunden, die in einem Forum, per E-Mail oder per Brief eine Frage stellen, beschreiben das jeweilige Problem in ihrer eigenen Sprache und in eigenen Worten. Im Rahmen des Forums führen Moderatoren den Nutzer zu einer Lösung. Bei einer Telefon-Hotline stehen Experten mit ihrem Fachwissen zur Verfügung. Solche Moderatoren und Experten sowie gegebenenfalls weiteres in die Abarbeitung von Kundenanfragen involviertes Personal greifen bedarfsweise auf zumindest eine Wissensdatenbank mit weiteren Informationen zu. Eine solche Datenbasis wird von Experten manuell aufgebaut und kann zum Beispiel nach Schlagworten durchsucht werden.

Eine systematische und automatisierte Lösung zur Verarbeitung und Abarbeitung von Kundenanfragen der oben skizzierten Art ist bisher nicht bekannt.

Eine Aufgabe der vorliegenden Erfindung besteht entsprechend darin, eine automatisierte oder zumindest im Wesentlichen automatisierte Lösung in Form eines Verfahrens und eines nach dem Verfahren arbeitenden Systems zur Verarbeitung und Abarbeitung solcher Kundenanfragen anzugeben.

Diese Aufgabe wird bezüglich eines Verfahrens erfindungsgemäß mit den Merkmalen des Anspruchs 1 gelöst. Danach ist bei einem Verfahren zur automatischen Verarbeitung einer Kundenanfrage Folgendes vorgesehen: Die Kundenanfrage wird automatisch in ein automatisch verarbeitbares Format konvertiert. Bekannte Lösungen und einer bekannten Lösung zugrunde liegende Anfragen, also zum Beispiel in der Vergangenheit eingegangene und beantwortete Kundenanfragen, werden ebenfalls in ein automatisch verarbeitbares Format konvertiert. Damit liegen die im Folgenden als aktuelle Kundenanfrage bezeichnete, aktuell bearbeitete Kundenanfrage und bekannte, "historische" Anfragen, die zur Unterscheidung als Basisanfragen bezeichnet werden, in einem automatisch verarbeitbaren Format vor. In diesem Format erfolgt die weitere Bearbeitung und Auswertung. Das automatisch verarbeitbare Format der aktuellen Kundenanfrage wird mit einer Mehrzahl von Basisanfragen, diese ebenfalls in dem automatisch verarbeitbaren Format, verglichen. Sobald eine Übereinstimmung oder eine ausreichende Übereinstimmung festgestellt wird, steht fest, dass die aktuelle Kundenanfrage oder eine mit der aktuellen Kundenanfrage ausreichend ähnliche Anfrage bereits einmal beantwortet wurde, nämlich bei der Beantwortung der ermittelten Basisanfrage. Die zu der Basisanfrage gehörige (bekannte) Lösung ist auch die Lösung der aktuellen Kundenanfrage oder kommt zumindest als Lösung für die aktuelle Kundenanfrage in Betracht. Damit ist automatisch eine Lösung oder eine zumindest potentielle Lösung für die aktuelle Kundenanfrage ermittelt worden. Diese Lösung kann automatisch in Form einer Antwort auf die Kundenanfrage ausgegeben werden.

Die oben genannte Aufgabe wird auch mittels eines nach dem Verfahren wie hier und im Folgenden beschrieben arbeitenden Systems gelöst. Dieses wird weiter unten mit zusätzlichen Einzelheiten beschrieben. Bereits jetzt sei darauf hingewiesen, dass für die weitere Beschreibung zur Vermeidung unnötiger Wiederholungen gilt, dass Merkmale und Details, die im Zusammenhang mit dem genannten Verfahren zur automatischen Verarbeitung einer Kundenanfrage sowie eventueller Ausgestaltungen beschrieben sind, selbstverständlich auch im Zusammenhang mit und im Hinblick auf das zur Durchführung des Verfahrens bestimmte und eingerichtete System zur automatischen Verarbeitung einer Kundenanfrage und umgekehrt gelten. Dementsprechend kann das Verfahren auch mittels einzelner oder mehrerer Verfahrensmerkmale fortgebildet sein, die sich auf von dem System ausgeführte Verfahrensschritte beziehen, und das System entsprechend auch durch Mittel zur Ausführung von im Rahmen des Verfahrens ausgeführten Verfahrensschritten fortgebildet sein. Folglich gelten Merkmale und Details, die im Zusammenhang mit gegenständlichen Verfahren und eventueller Ausgestaltungen beschrieben sind, auch für das System und umgekehrt, so dass bezüglich der Offenbarung zu den einzelnen Aspekten der Erfindung stets wechselseitig Bezug genommen wird bzw. werden kann.

Der Vorteil der Erfindung besteht darin, dass durch die automatische Konvertierung zurückliegender Anfragen in ein automatisch verarbeitbares Format und die Zuordnung jeweils zugehöriger Lösungen eine breite Wissensbasis für eine automatische Auswertung erschlossen wird. Durch die automatische Konvertierung der Kundenanfrage in ein automatisch verarbeitbares Format kann die Kundenanfrage in diesem Format mit bekannten, "historischen" Anfragen in einem entsprechenden Format verglichen werden. Auf diese Art und Weise lässt sich automatisch feststellen, ob die aktuell zu beantwortende Kundenanfrage bereits behandelt wurde und in der Wissensbasis vorhanden ist. Im Falle einer Übereinstimmung oder einer zumindest ausreichenden Übereinstimmung kann die zu der ermittelten bekannten Anfrage gehörige Lösung aus der Datenbasis geladen werden und als Basis für eine Antwort auf die Kundenanfrage dienen.

Die Konvertierung der Kundenanfrage sowie zurückliegender Anfragen erfolgt bevorzugt mit Mitteln des maschinellen Lernens. Dabei erfolgt optional eine sogenannte Gruppierung und Klassifizierung. Das Ergebnis der Konvertierung ist dabei für beide Anfragen (aktuelle Kundenanfrage und historische Anfrage) zum Beispiel eine Menge von Schlagworten in einer jeweils einschlägigen Fachterminologie und in einer einheitlichen Sprache, zum Beispiel Englisch, sodass sich in diesem Fall der Vergleich der Kundenanfrage in dem automatisch verarbeitbaren Format mit historischen Anfragen in einem entsprechenden automatisch verarbeitbaren Format auf einen Mengenvergleich, nämlich einen Vergleich der aufgrund der automatischen Konvertierung resultierenden Schlagworte/Schlagwortmengen, reduziert.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / des gegenständlichen Systems nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer bevorzugten Ausführungsform des Verfahrens erfolgt die Konvertierung der Kundenanfrage in ein automatisch verarbeitbares Format und die Konvertierung einer bekannten Anfrage in ein automatisch verarbeitbares Format mittels zweier Funktionseinheiten eines Computerprogramms, die im Folgenden zur sprachlich eindeutigen Identifizierung als Anfrageverarbeitungseinheit und Basisdatenverarbeitungseinheit bezeichnet werden, denen dieselbe oder zumindest im Wesentlichen dieselbe Funktionalität zugrunde liegt. Die Funktionalität der automatischen Konvertierung in ein automatisch verarbeitbares Format muss demnach in einem beim Ausführen des Verfahrens ablaufenden Computerprogramm nur einmal implementiert sein, zumindest können die Anfrageverarbeitungseinheit und die Basisdatenverarbeitungseinheit einzelne im Rahmen einer solchen automatischen Konvertierung ausgeführte Funktionen gemeinsam nutzen. Bei diesen grundsätzlich gemeinsam benutzbaren Funktionen handelt es sich zum Beispiel um eine Software-Implementierung von Algorithmen des maschinellen Lernens, insbesondere Algorithmen, die eine sogenannte Gruppierung und/oder Klassifizierung vornehmen (in diesem Falle ist die Gruppierung und/oder Klassifizierung die automatische Konvertierung in ein automatisch verarbeitbares Format). Die gemeinsame Nutzung gewährleistet auch in besonderem Maße die Eignung der resultierenden automatisch verarbeitbaren Formate für einen späteren automatischen Vergleich.

Die oben genannte Aufgabe wird auch mittels eines zur automatischen Verarbeitung einer Kundenanfrage bestimmten und eingerichteten Systems gelöst. Das System umfasst dafür Mittel zur Ausführung des hier und im Folgenden beschriebenen Verfahrens, nämlich insbesondere in Software implementierte Funktionseinheiten. Bei solchen Funktionseinheiten handelt es sich zunächst um eine Funktionseinheit, welche eine automatische Konvertierung einer Kundenanfrage in ein automatisch verarbeitbares Format vornimmt. Eine weitere Funktionseinheit konvertiert bekannte Lösungen und einer bekannten Lösung zugrunde liegende Anfragen ebenfalls automatisch in ein automatisch verarbeitbares Format. Eine nochmals weitere Funktionseinheit ist dafür bestimmt, einen automatischen Vergleich der Kundenanfrage in dem automatisch verarbeitbaren Format mit bekannten Lösungen zugrunde liegenden Anfragen in dem automatisch verarbeitbaren Format durchzuführen. Diese Funktionseinheit führt diesen Vergleich zur Ermittlung einer zu der Kundenanfrage passenden bekannten Anfrage sowie zur Ermittlung der zu der so aufgefundenen bekannten Anfrage gehörigen Lösung durch. Diese Lösung fungiert als Basis für eine mittels des Systems automatisch ausgegebene Antwort auf die aktuelle Kundenanfrage.

Das dem Betrieb des Systems zugrunde liegende und im Folgenden anhand einer exemplarischen Ausführungsform mit weiteren beispielhaften Einzelheiten beschriebene Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch das zur Ausführung des Verfahrens bestimmte System, zum Beispiel ein einzelner Computer, ein Computernetzwerk oder auch ein in der Cloud erreichbares Computernetzwerk, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch menschliche Experten veranlasst werden. Zumindest bedeutet jede Verwendung des Begriffs "automatisch", dass die betreffende Aktion aufgrund des Computerprogramms oder unter Kontrolle des Computerprogramms erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein System zur automatischen Verarbeitung einer Kundenanfrage,
- FIG 2: ein durch das System als Basis für die automatische Verarbeitung einer Kundenanfrage generiertes AnfrageLösungs-Paar und
- FIG 3: eine schematisch vereinfachte Darstellung eines mittels eines Computers ausführbaren Computerprogramms mit einer Implementation des hier vorgeschlagenen Verfahrens zur automatischen Verarbeitung einer Kundenanfrage.

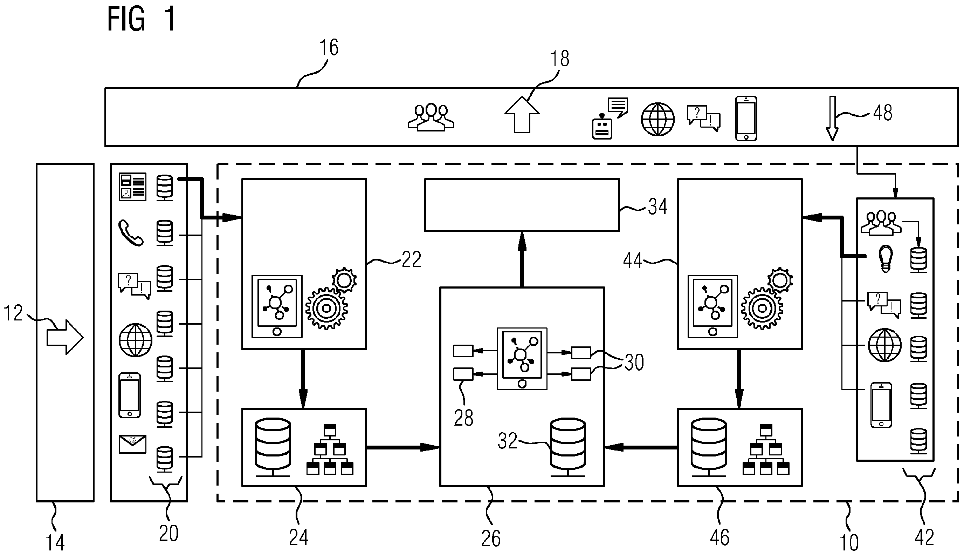

Die Darstellung in FIG 1 zeigt ein im Folgenden kurz als System 10 bezeichnetes System zur automatischen Ver- und/oder Bearbeitung von Kundenanfragen 12. Dem System 10 werden auf einer Eingangsseite 14 Kundenanfragen 12 zugeleitet und auf einer Ausgangsseite 16 werden aufgrund einer Verarbeitung mittels des Systems 10 generierte Antworten 18 ausgegeben.

Die Kundenanfragen 12 können in unterschiedlichster Form eingehen oder vorliegen und werden zunächst in einem einer jeweiligen Anfrageart zugeordneten Speicher (Anfragespeicher 20) zwischengespeichert. In der Darstellung in FIG 1 sind exemplarisch einzelne Anfragearten symbolisch gezeigt, nämlich eine Anfrage per E-Mail oder auf sonstigem Wege, für die ein Ticket generiert wird, eine Anfrage per Telefon, eine Anfrage in einem Forum, eine Anfrage per Internet, eine Anfrage über soziale Medien, eine Anfrage per Post und schließlich für alle denkbaren verbleibenden Anfragemöglichkeiten eine Anfrage ohne Symbol.

Mittels einer Anfrageverarbeitungseinheit 22, welche Zugriff auf die Anfragespeicher 20 oder zumindest einige Anfragespeicher 20 hat, erfolgt im Wege einer Clusteranalyse (clustering) eine automatische Gruppierung und Klassifizierung (classification) der Kundenanfragen 12. Die Anfrageverarbeitungseinheit 22 benutzt dabei automatische Analysemethoden wie zum Beispiel Verfahren zur Ermittlung einer semantischen Nähe (semantic clustering), ontologische Verfahren (ontology), zum Beispiel auf Basis von sogenannten Wissensgraphen (knowledge graphs), etc.

Ein Problem, mit dem ein Kunde konfrontiert sein könnte, ist beispielsweise ein nicht mehr oder nicht mehr ordnungsgemäß funktionierendes Gerät, insbesondere ein elektrisches Gerät. Der Kunde kann sein Problem in einer Kundenanfrage 12 unterschiedlich und vor allem unterschiedlich detailliert beschreiben. Eine resultierende Kundenanfrage 12 kann lauten "Ich habe ein Problem" oder auch genauer spezifiziert sein, zum Beispiel in einer Form wie "In dem Gerät mit der Typenbezeichnung XYZ-123 ist die Teilfunktionalität FFFFF im Anschluss an die durch Servicepersonal vorgenommene Maßnahme MMMMMM am Gerät ausgefallen".

Bei einem vergleichsweise einfachen Gerät, wie zum Beispiel einer Bohrmaschine, kann der Benutzer eine Fehlfunktion zum Beispiel bemerken, indem es aus der Bohrmaschine raucht und riecht und die Bohrmaschine nicht mehr funktioniert. Auch hier kann eine Kundenanfrage 12 unterschiedlich detailliert formuliert sein: "Ich habe ein Problem"; "Meine Bohrmaschine funktioniert nicht mehr"; "Aus meiner Bohrmaschine hat es geraucht und jetzt riecht es verbrannt"; "Bei meiner Bohrmaschine scheint der Motor defekt zu sein" usw.

Anhand der Kundenanfragen 12 entsteht ein Baum, nämlich ein Baum im Sinne einer gerichteten Datenstruktur. Ein durch eine solche gerichtete Datenstruktur abgebildeter Baum umfasst bekanntlich eine Wurzel und ausgehend von dieser Wurzel Verzweigungen (sogenannte Kanten) und sogenannte Knoten oder Blätter an den Enden der Kanten, wobei sich an einen Knoten eine oder mehrere Kanten mit weiteren Verzweigungen anschließen kann bzw. können. Von einem Knoten abwärts (von der Wurzel in Richtung auf die Blätter) kann aus einem Baum ein Teil gewissermaßen "herausgeschnitten" werden und bildet einen eigenen Baum. Ausgehend von der Wurzel und in Richtung auf die Blätter umfasst ein Baum je nach Komplexität eine Vielzahl von durch Knoten definierten Hierarchien. Bei einem Unternehmen, das zum Beispiel zehn verschiedene Produkte/Geräte anbietet, können zu jedem Produkt Kundenanfragen 12 eingehen. Zur Organisation der Kundenanfragen in einem Baum ist es folglich sinnvoll, Kundenanfragen 12, die zu einem bestimmten Gerät/Produkt gehören, in dem Baum unterhalb eines Knotens, welcher das jeweilige Gerät/Produkt repräsentiert, anzuordnen. In dem Baum entsteht damit eine Hierarchieebene für die unterschiedlichen Geräte/Produkte. Jedes Gerät/Produkt zeichnet sich durch spezifische Einzelmerkmale aus. Eine Bohrmaschine umfasst zum Beispiel zumindest einen mechanischen Teil mit einem Getriebe und einen elektrischen Teil mit einem Elektromotor. Folglich ist in einem solchen Baum zum Ablegen von Kundenanfragen 12, welche sich auf eine Bohrmaschine beziehen, eine Ebene sinnvoll, welche eine Unterscheidung zwischen dem elektrischen Teil und dem mechanischen Teil der Bohrmaschine erlaubt und unterhalb dieser beiden Ebenen sind jeweils weitere Ebenen sinnvoll, welche innerhalb des elektrischen bzw. mechanischen Teils zumindest eine Unterscheidung zwischen dem Elektromotor und anderen elektrischen Funktionseinheiten bzw. dem Getriebe und anderen mechanischen Funktionseinheiten erlaubt.

Das - bewusst einfach - gewählte Beispiel mit einer Bohrmaschine soll lediglich das Verständnis einer mittels der Anfrageverarbeitungseinheit 22 erfolgenden Verarbeitung einer Kundenanfrage 12 und eine Ablage einer Kundenanfrage 12 in einer Anfragedatenbasis 24 erläutern. Ein Baum ist dabei ein Beispiel für eine der Anfragedatenbasis 24 zugrunde liegenden Datenstruktur ("Anfragebaum").

Die Datenstruktur der Anfragedatenbasis 24 kann beim Anlegen der Anfragedatenbasis 24 entstehen. Insoweit wird zum Beispiel bei einer ersten sich auf eine Bohrmaschine beziehenden Kundenanfrage 12 ein entsprechender Knoten in dem Baum angelegt, gegebenenfalls in einer Hierarchieebene "unterhalb" eines zuvor oder im selben Zuge angelegten Knotens "elektrisches Gerät". Genauso kann die Datenstruktur der Anfragedatenbasis 24 in ihren Grundzügen bereits vorgegeben sein, zum Beispiel weil ein das hier vorgeschlagene System 10 nutzendes Unternehmen seine Produkte und deren Aufbau kennt und damit eine zu einem Produkt gehörige hierarchische Struktur (zum Beispiel: "elektrischer Teil", "Elektromotor"; "mechanischer Teil", "Getriebe") vorgeben kann.

Bei einer vorgegebenen Struktur erfolgt mittels der Anfrageverarbeitungseinheit 22 bei einer als Baum organisierten Anfragedatenbasis 24 ein Zuordnen der jeweiligen Kundenanfrage 12 zu einem Knoten oder Blatt des Baums. Dies erfolgt zum Beispiel im Wege einer Clusteranalyse (clustering), indem eine automatische Gruppierung und Klassifizierung (classification) der Kundenanfragen 12 in Bezug auf die darin enthaltenen Informationen, zum Beispiel "Bohrmaschine", "Motor" etc. erfolgt. Wie bereits erwähnt, nutzt die Anfrageverarbeitungseinheit 22 dabei automatische Analysemethoden wie zum Beispiel Verfahren zur Ermittlung einer semantischen Nähe (semantic clustering), ontologische Verfahren (ontology), zum Beispiel auf Basis von sogenannten Wissensgraphen (knowledge graphs), etc. Auf diese Weise wird zum Beispiel ermittelt, dass ein Stichwort wie "Antrieb" in einer Kundenanfrage 12 genauso zu behandeln ist wie das Stichwort "Motor" und dass eine Kundenanfragen mit einem solchen Stichwort entsprechend genauso in der Anfrageverarbeitungseinheit 22 einzuordnen ist wie eine ansonsten identische Kundenanfrage mit dem Stichwort "Motor".

Im Rahmen der Verarbeitung der Kundenanfragen 12 durch die Anfrageverarbeitungseinheit 22 erfolgt optional eine Verbesserung der Verarbeitungsergebnisse der Anfrageverarbeitungseinheit 22, indem diese automatisch oder zumindest im Wesentlichen automatisch "lernt". Bei einer eher umgangssprachlichen Formulierung der Kundenanfrage 12, zum Beispiel "Aus meiner Bohrmaschine hat es geraucht und jetzt riecht es verbrannt", können aufgrund eines automatischen Lernens die Stichworte "Rauch" und "Brand" automatisch mit dem elektrischen Teil, insbesondere dem Elektromotor eines Geräts, verknüpft sein, so dass auch eine solche Kundenanfrage 12 in die Anfrageverarbeitungseinheit 22 eingeordnet werden kann.

Eine solche Verbesserung der Verarbeitungsergebnisse erfolgt dabei zum Beispiel inkrementell, indem im Rahmen des Lernens erreichte Verbesserungen unmittelbar oder zyklisch der zukünftigen Verarbeitung neuer Kundenanfragen 12 zugrunde gelegt werden. Das automatische "Lernen" erfolgt auf Basis grundsätzlich an sich bekannter Verfahren. Dabei können optional unterschiedliche Lernarten alternativ oder kumulativ zum Einsatz kommen, nämlich insbesondere ein unbeaufsichtigtes Lernen (unsupervised learning), und/oder ein beaufsichtigtes, interaktives Lernen (supervised & interactive learning). Beim beaufsichtigten, interaktiven Lernen werden während einer Trainingsphase (training period) zum Beispiel bestehende Lösungsbäume (solution trees) verwendet und tatsächliche Kundenanfragen 12 anhand dieser Lösungsbäume bearbeitet, wobei durch Eingriffe von Experten die Lösungsbäume ergänzt und/oder angepasst werden.

Als Ergebnis der Verarbeitung der Anfrageverarbeitungseinheit 22 resultiert eine Anfragedatenbasis 24, nämlich eine Datenbasis 24 mit einer hierarchischen Sortierung klassifizierter Anfragen. Die von der Anfragedatenbasis 24 umfassten klassifizierten Anfragen basieren auf den aktuellen Kundenanfragen 12. Im Rahmen der Klassifizierung entsteht aus einer aktuellen Kundenanfrage 12 zum Beispiel eine Anfrage in einer angepassten Terminologie, insbesondere in einer jeweiligen Fachterminologie, und/oder in einer innerhalb des Systems 10 verwendeten Sprache, zum Beispiel Englisch, oder einer Sprache aus einer Gruppe von innerhalb des Systems 10 verwendeten Sprachen. Die in der Anfragedatenbasis 24 gespeicherten klassifizierten und hierarchisch sortierten Anfragen sind also nicht notwendig exakt die aktuellen Kundenanfragen 12. Wesentlich ist aber, dass zumindest ein Bezug zu der aktuellen Kundenanfrage 12 erhalten bleibt, sodass im Rahmen der Verarbeitung mittels des Systems 10 die aktuelle Kundenanfrage 12 beantwortet werden kann und der Anfragende eine Antwort 18 erhält. Optional wird bei mehreren identischen Kundenanfragen 12 nur eine entsprechende Anfrage in der Anfragedatenbasis 24 gespeichert, sofern der Bezug zu den aktuellen Kundenanfragen 12 erhalten bleibt, sodass jede einzelne ursprüngliche Kundenanfrage 12 beantwortet werden kann.

Auf die Anfragedatenbasis 24 und die dort gespeicherten Anfragen greift automatisch eine zentrale Verarbeitungsinstanz 26 zu, nämlich entsprechend der hierarchischen Reihenfolge der Anfragen in der Anfragedatenbasis 24. Die zentrale Verarbeitungsinstanz 26 nimmt automatisch eine Zuordnung (mapping) einer jeweils betrachteten Anfrage 28 aus der Anfragedatenbasis 24 zu einer bekannten Lösung 30 vor. Diese Zuordnung erfolgt auf Basis der Daten einer Zuordnungsdatenbank 32, in welcher in einer automatisch verarbeitbaren Form eine Vielzahl möglicher Anfragen sowie zu jeder von der Zuordnungsdatenbank 32 umfassten Anfrage zumindest eine Lösung gespeichert sind. Beim Zugriff auf die Zuordnungsdatenbank 32 wird zu der jeweils aktuell aus der Anfragedatenbasis 24 abgerufenen Anfrage 28 eine passende, in der Zuordnungsdatenbank 32 gespeicherte Anfrage gesucht. Diese Suche wird aufgrund der zuvor erfolgten Klassifizierung erleichtert. Sobald in der Zuordnungsdatenbank 32 eine passende, gespeicherte Anfrage identifiziert ist, wird anhand der Zuordnung innerhalb der Zuordnungsdatenbank 32 die zugeordnete, gespeicherte Lösung abgerufen und als Lösung 30 der ursprünglichen, aus der Anfragedatenbasis 24 abgerufenen Anfrage 28 zugeordnet.

Optional wird auch die Verarbeitung innerhalb der zentralen Verarbeitungsinstanz 26 kontinuierlich, insbesondere inkrementell, durch automatisiertes Lernen verbessert. Das automatisierte Lernen erfolgt dabei in grundsätzlich derselben Form, wie dies weiter oben bezüglich des automatisierten Lernens innerhalb der Anfrageverarbeitungseinheit 22 erläutert wurde, so dass hier zur Vermeidung von Wiederholungen darauf verwiesen wird.

Die automatisch mittels der zentralen Verarbeitungsinstanz 26 gefundene Lösung 30 wird an eine Verteilinstanz 34 weitergeleitet. Die Verteilinstanz 34 wählt automatisch einen passenden Kommunikationskanal (communication channel) zur Ausgabe der Lösung 30 zwecks Beantwortung der zugrunde liegenden Kundenanfrage 12. Der jeweils ausgewählte Kommunikationskanal ist bevorzugt ein Kommunikationskanal entsprechend dem ursprünglichen Erhalt der Kundenanfrage 12. Dann erfolgt die automatische Auswahl eines Kommunikationskanals zum Beispiel anhand einer mit der Anfrage 28 mitgeführten und den ursprünglichen Kommunikationskanal referenzierenden Kennung. Zusätzlich und/oder alternativ kann vorgesehen sein, dass die Verteilinstanz 34 den jeweiligen Kommunikationskanal anhand der mittels der zentralen Verarbeitungsinstanz 26 gefundenen Lösung 30 auswählt, zum Beispiel weil eine Lösung nur oder besonders gut über einen bestimmten Kommunikationskanal weitergeleitet werden kann. Nach Auswahl eines Kommunikationskanals wird die mittels der zentralen Verarbeitungsinstanz 26 gefundene Lösung 30 als Antwort 18 auf die aktuelle Kundenanfrage 12 ausgegeben. In der Darstellung in FIG 1 sind insoweit als Kommunikationskanäle auf der Ausgangsseite 16 exemplarisch einzelne Kommunikationskanäle symbolisch gezeigt. Ganz links ist eine Übermittlung der Lösung 30 als Antwort 18 auf die aktuelle Kundenanfrage 12 durch Servicepersonal gezeigt, wobei der jeweilige Experte die ursprüngliche Kundenanfrage 12 auf Basis der ihm beispielsweise an einem Bildschirm angezeigten Lösung 30 telefonisch, per E-Mail oder in sonstiger Weise beantwortet und dabei selbst eine Formulierung der Antwort 18 vornimmt, so dass aus der aktuellen Kundenanfrage 12 hervorgehende Sprachpräferenzen und dergleichen berücksichtigt werden können. Des Weiteren sind (von links nach rechts) als Kommunikationskanäle zur automatischen Übermittlung der Lösung 30 als Antwort 18 auf die aktuelle Kundenanfrage 12 eine Übermittlung mittels eines sogenannten Chatbots, eine Übermittlung mittels Internet, zum Beispiel per E-Mail, eine Übermittlung mittels eines (Internet-)Forums und eine Übermittlung mittels sozialer Medien gezeigt.

Bisher wurde damit der "Weg" von einer Kundenanfrage 12 zu einer automatisch generierten Antwort 18 auf diese Kundenanfrage 12 auf Basis einer eingangsseitigen Verarbeitung mittels einer Anfrageverarbeitungseinheit 22, einer hierarchischen Erfassung der Ergebnisse der Anfrageverarbeitungseinheit 22 in einer Anfragedatenbasis 24 und schließlich einer automatischen Verarbeitung von aus der Anfragedatenbasis 24 abgerufenen Anfragen 28 mittels der zentralen Verarbeitungsinstanz 26 erläutert. Dies betrifft den linken und den mittleren Bereich der Darstellung in FIG 1. Abschließend wendet sich die Beschreibung daher nun dem rechten Bereich der Darstellung in FIG 1 und dort der Generierung der Daten für die Zuordnungsdatenbank 32 zu.

Wie bereits erläutert, umfasst die Zuordnungsdatenbank 32 eine Zuordnung einer bekannten Anfrage zu einer bekannten Lösung. Die Zuordnung kann dabei wie bei einer LookUp-Tabelle oder ähnlich wie bei einer LookUp-Tabelle kodiert sein. Die Zuordnung kann zum Beispiel ähnlich wie bei einem künstlichen neuronalen Netz kodiert sein, wobei die Zuordnung aufgrund bestimmter, auf Basis der Anfrage ermittelter Daten sowie bestimmter, auf Basis der Lösung ermittelter Daten eine Zusammengehörigkeit von Anfrage und Lösung oder ein Maß (eine Wahrscheinlichkeit) für eine solche Zusammengehörigkeit ermittelt. Das Maß der Zusammengehörigkeit kann zum Beispiel umso größer sein, je mehr gemeinsame (klassifizierte) Begriffe oder Stichworte eine Anfrage und eine Lösung gemeinsam haben.

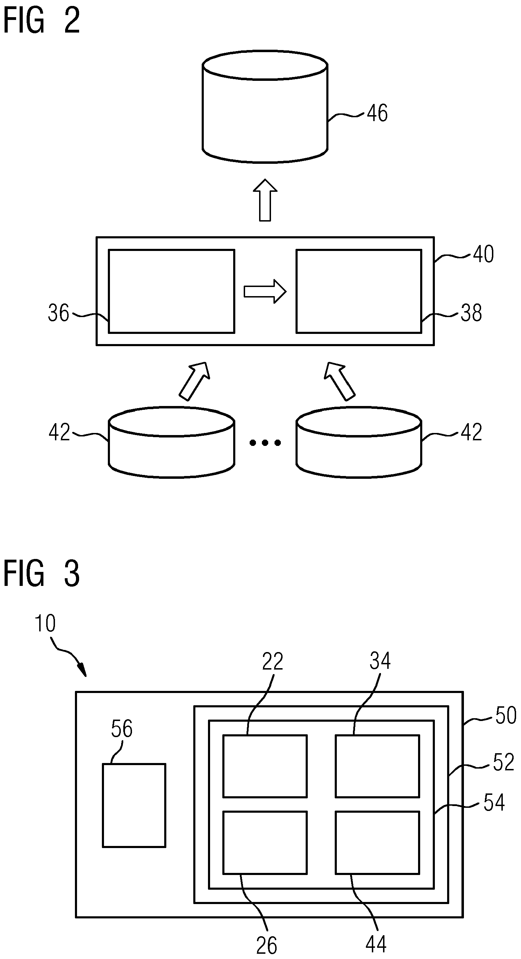

Die bekannten Anfragen werden im Folgenden - nur zur sprachlichen Unterscheidung von den als Kundenanfragen 12 eingehenden neuen Anfragen und einer jeweils resultierenden, verarbeiteten Anfrage 28 - als Basisanfragen 36 (FIG 2) bezeichnet. Eine zu einer Basisanfrage 36 gehörige Lösung wird entsprechend - und ebenfalls nur zur sprachlichen Unterscheidung - als Basislösung 38 (FIG 2) bezeichnet. Die Basislösung 38 ist eine Lösung für ein in Form der Basisanfrage 36 formuliertes Problem.

Der Inhalt der Zuordnungsdatenbank 32 basiert damit also auf einer Menge von zumindest paarig zusammengehörigen Basisanfragen 36 und Basislösungen 38, wobei bei einem kurz als Anfrage-Lösungs-Paar 40 bezeichneten Basisanfrage-Basislösungs-Paar 40 mit genau einer Basisanfrage 36 und genau einer Basislösung 38 die Basislösung 38 das in Form der zugrunde liegenden Basisanfrage 36 formulierte Problem löst. Grundsätzlich kann eine Basislösung 38 zu mehreren Basisanfragen 36 gehören, derart, dass ein und dieselbe Basislösung 38 ein in Form unterschiedlicher Basisanfragen 36 formuliertes Problem oder aber auch unterschiedliche Probleme löst. Im Interesse einer besseren Lesbarkeit der nachfolgenden Beschreibung wird diese zur sprachlichen Vereinfachung auf Basis von Anfrage-Lösungs-Paaren 40 mit jeweils genau einer Basisanfrage 36 und genau einer Basislösung 38 fortgesetzt. Die allgemeinere Form mit einer grundsätzlich beliebigen Anzahl von Basisanfragen 36 und einer für alle Basisanfragen 36 "passenden" Basislösung 38 ist dabei stets mitzulesen. In der Paarbeziehung, nämlich einer zugrunde liegenden Datenstruktur, ist die Zusammengehörigkeit von Basisanfrage 36 und Basislösung 38 kodiert.

Die Darstellung in FIG 2 zeigt schematisch vereinfacht ein Anfrage-Lösungs-Paar 40 mit einer davon umfassten Basisanfrage 36 und Basislösung 38 und der durch den nach rechts weisenden Blockpfeil veranschaulichten Zuordnung der Basislösung 38 zu der jeweiligen Basisanfrage 36. Die Darstellung in FIG 2 ist damit auch eine schematisch vereinfachte Darstellung einer Datenstruktur für Anfrage-Lösungs-Paare 40.

Die Daten für solche Paare 40 und damit die späteren Daten für die Zuordnungsdatenbank 32 können aus unterschiedlichen Datenquellen 42 stammen. In der Darstellung in FIG 1 sind ganz rechts von oben nach unten symbolisch einzelne Datenquellen 42 gezeigt. Danach fungiert als Datenquelle 42 zum Beispiel eine Wissensdatenbank (knowledge database), die von Experten mit Expertenwissen (Anfragen und Lösungen) befüllt wird. Ansonsten können auch ein (Internet-)Forum, das Internet oder soziale Medien als Datenquelle 42 für bekannte Anfragen und zugehörige Lösungen fungieren.

Mittels einer Basisdatenverarbeitungseinheit 44 erfolgt auf Basis zumindest einer Datenquelle 42 eine Gruppierung (clustering) und Klassifizierung (classification) der aus der jeweiligen Datenquelle 42 oder den jeweiligen Datenquellen 42 abrufbaren Anfragen und zugehörigen Lösungen und eine Generierung jeweils resultierender Basisanfragen 36 bzw. Basislösungen 38. Die Basisdatenverarbeitungseinheit 44 nimmt automatisch eine Gruppierung und Klassifizierung entsprechend der mittels der Anfrageverarbeitungseinheit 22 bewirkten Gruppierung und Klassifizierung vor. Die Gruppierung und Klassifizierung erfolgt zumindest für den Anfrage-Teil (die Basisanfrage 36) eines Anfrage-Lösungs-Paars 40, optional für den Anfrage-Teil (die Basisanfrage 36) und den Lösungs-Teil (die Basislösung 38) eines Anfrage-Lösungs-Paars 40. Die Basisdatenverarbeitungseinheit 44 benutzt dabei automatische Analysemethoden wie sie zuvor bei der Erläuterung der Funktionalität der Anfrageverarbeitungseinheit 22 beschrieben wurden, so dass hier darauf verwiesen wird.

Optional erfolgt auch bei der automatischen Verarbeitung der Anfrage-Lösungs-Paare 40, zumindest der jeweiligen Basisanfragen 36, mittels der Basisdatenverarbeitungseinheit 44 eine Verbesserung der Verarbeitungsergebnisse der Basisdatenverarbeitungseinheit 44, indem diese automatisch oder zumindest im Wesentlichen automatisch "lernt". Das automatisierte Lernen erfolgt dabei in grundsätzlich derselben Form, wie dies weiter oben bezüglich des automatisierten Lernens innerhalb der Anfrageverarbeitungseinheit 22 erläutert wurde, so dass zur Vermeidung von Wiederholungen hier erneut darauf verwiesen wird.

Als Ergebnis der Verarbeitung der Basisdatenverarbeitungseinheit 44 resultiert eine Lösungsdatenbasis 46 (FIG 1, FIG 2), nämlich eine Datenbasis 46 mit einer hierarchischen Sortierung klassifizierter Anfrage-Lösungs-Paare 40. Als Datenstruktur für die Lösungsdatenbasis 46 kommt zum Beispiel ebenfalls ein Baum in Betracht ("Lösungsbaum"). Insoweit wird auf die Beschreibung weiter oben im Zusammenhang mit einer möglichen Datenstruktur der Anfragedatenbasis 24 verwiesen. Innerhalb der hierarchischen Sortierung klassifizierter Anfrage-Lösungs-Paare 40 ergibt sich die hierarchische Position dabei zum Beispiel ebenso, wie dies weiter oben für die Hierarchie innerhalb der Anfragedatenbasis 24 beschrieben wurde, so dass auch insoweit auf die bereits erfolgte Beschreibung verwiesen wird.

Die von der Lösungsdatenbasis 46 umfassten Anfrage-Lösungs-Paare 40 basieren auf den historischen Lösungen und jeweils zugrunde liegenden Anfragen aus den Datenquellen 42. Im Rahmen der Klassifizierung und Gruppierung entsteht aus einer ursprünglichen Formulierung zumindest der jeweils zugrunde liegenden Anfrage eine Basisanfrage 36, also zum Beispiel eine Formulierung der Anfrage in einer angepassten Terminologie, insbesondere in einer jeweiligen Fachterminologie, und/oder in einer innerhalb des Systems 10 verwendeten Sprache, zum Beispiel Englisch, oder einer Sprache aus einer Gruppe von innerhalb des Systems 10 verwendeten Sprachen. Dasselbe gilt bei einer grundsätzlich optionalen entsprechenden Verarbeitung einer aus einer Datenquelle 42 stammenden bekannten Lösung und einer resultierenden Basislösung 38. Ohne eine solche Verarbeitung (Klassifizierung und Gruppierung) kann grundsätzlich auch eine aus einer Datenquelle 42 stammende bekannte Lösung unmittelbar als Basislösung 38 übernommen werden. Die Inhalte der resultierenden Lösungsdatenbasis 46 werden direkt oder indirekt, zum Beispiel im Wege einer Referenzierung, in die Zuordnungsdatenbank 32 übernommen.

Damit werden die zur Verfügung stehenden, unstrukturierten und oftmals in einer Freitextform zur Verfügung stehenden Informationen (neue Anfragen einerseits sowie bekannte Anfragen und bekannte Lösungen andererseits) komplett mit Mitteln des maschinellen Lernens (machine learning) in eine automatisch verarbeitbare Form aufbereitet. Dies gilt sowohl für die "Anfrageseite" und die dort als Kundenanfragen 12 eintreffenden neuen Anfragen (FIG 1, linke Seite) wie auch für die "Lösungsseite (FIG 1, rechte Seite) und die dort verarbeiteten bekannten Anfragen und die jeweils zugehörigen bekannten Lösungen. Im Wege der Gruppierung und Klassifizierung der jeweiligen Eingangsdaten (neue Anfragen; bekannte Anfragen /Lösungen) entstehen mittels der Anfrageverarbeitungseinheit 22 einerseits sowie mittels der Basisdatenverarbeitungseinheit 44 andererseits die Inhalte der Anfragedatenbasis 24 bzw. der Lösungsdatenbasis 46 in einer automatisch verarbeitbaren Form.

Bei einer Verarbeitung einer auf einer Kundenanfrage 12 basierenden Anfrage 28 mittels der zentralen Verarbeitungsinstanz 26 kann zu einer aufgrund der vorangehenden Klassifizierung und Gruppierung (Anfrageverarbeitungseinheit 22) gewissermaßen verallgemeinerten Formulierung der Anfrage 28 leicht oder zumindest eher in einem Anfrage-Lösungs-Paar 40 der Zuordnungsdatenbank 32 eine passende Basisanfrage 36 gefunden werden. Sobald eine solche passende Basisanfrage 36 oder zumindest eine passende Basisanfrage 36 ermittelt wurde, wird die im jeweiligen Anfrage-Lösungs-Paar 40 zugehörige Basislösung 38 oder werden die im jeweiligen Anfrage-Lösungs-Paar 40 zugehörigen Basislösungen 38 automatisch von der zentralen Verarbeitungsinstanz 26 als Lösung 30 aus der Zuordnungsdatenbank 32 oder, insbesondere im Falle einer Referenzierung, aus der Lösungsdatenbasis 46 geladen. Die Ausgabe der so gefundenen und zu der aktuellen Kundenanfrage 12 passenden Lösung 30 (Lösungen 30) erfolgt wie dies weiter oben bereits beschrieben wurde.

Der hier vorgeschlagene Ansatz basiert demnach darauf, dass ein ursprünglicher "menschlicher Text" maschinenlesbar gemacht wird, also in eine numerische Matrix übersetzt wird. Dabei wird dann eine numerische Repräsentation von Buchstaben, Worten, Sätzen und deren Abhängigkeit kreiert. Das Ergebnis einer solchen Verarbeitung ist einerseits die Anfragedatenbasis 24 und andererseits die Lösungsdatenbasis 46, insbesondere ein Anfragebaum sowie ein Lösungsbaum. Zu deren Generierung kann man z.B. das Vektorraummodell, das Boolesche Modell oder das Probabilistische Modell nutzen. Die nun maschinen-verarbeitbare numerische Matrix wird als Input für das maschine learning genutzt, mit dem Ziel Entscheidungsbäume abzuleiten bzw. ein hieratisches Clustern zu erreichen. Typische Verfahren sind hier z.B. k-Means, Gaussian Mixture Models. Diese Verfahren werden dann auch wieder genutzt, um Anfrage- zu Lösungsbäume zu mappen

Bei einer baumartigen Struktur der Anfragedatenbasis 24 und der Lösungsdatenbasis 46 (Anfragebaum; Lösungsbaum) kann sich ergeben, dass als "Antwort" 30 auf eine Kundenanfrage 12 aufgrund von zu wenigen Informationen in der Kundenanfrage 12 nur eine vergleichsweise "allgemeine Antwort" gegeben werden kann. Eine Kundenanfrage, wie zum Beispiel "Meine Bohrmaschine funktioniert nicht", kann nicht qualifiziert mit einer für jedes denkbare zugrunde liegende Szenario passenden Lösung 30 beantwortet werden, denn der beobachtete Fehler kann auf Basis der Information "funktioniert nicht" genauso im elektrischen wie auch im mechanischen Teil der Bohrmaschine liegen und es kann sogar sein, dass sich die vermeintliche Funktionsuntüchtigkeit der Bohrmaschine ergibt, weil der Netzstecker nicht eingesteckt ist oder weil im Netzkabel ein Leitungsbruch vorliegt. Dann wird als Lösung 30 für die zugrunde liegende Kundenanfrage 12 eine zu der Hierarchieebene der Kundenanfrage 12 in der Anfragedatenbasis 24 passende Hierarchieebene in der Lösungsdatenbasis 46 ausgewählt. Die Hierarchieebene in der Lösungsdatenbasis 46 betrifft beim gewählten Beispiel die Grundfunktionalität des Geräts und als Lösung 30 werden zum Beispiel Fragen in Bezug auf Elemente einer nächstniedrigeren Hierarchieebene, wie zum Beispiel "Netzanschluss / Energieversorgung" (Frage: "Besteht eine Netzverbindung?"), "mechanischer Teil" (Frage: "Ist das Bohrfutter frei drehbar?") oder "elektrischer Teil" (Frage: "Ist es zu einer Rauch- oder Geruchsentwicklung gekommen?"), ausgegeben. Eine solche Ausgabe gibt bei einer baumförmigen Datenstruktur der Lösungsdatenbasis 46 gewissermaßen den Teil des Lösungsbaums unterhalb der zu der Kundenanfrage 12 passenden Hierarchieebene in einer lesbaren Form aus. Auf Basis einer solchen Ausgabe kann eine neue Kundenanfrage 12 mit weiteren Details formuliert werden, welcher dann automatisch als Lösung 30 eine genauere Antwort zugeordnet werden kann.

Nach einer Ausgabe einer Lösung 30 (oder mehrerer Lösungen 30) können optional Rückmeldungen 48, also zum Beispiel Fälle, in denen sich eine Lösung 30 als nicht praktikabel herausgestellt hat (false response), ausgewertet werden, um die Qualität der Lösungsdatenbasis 46 und damit den Inhalt der Zuordnungsdatenbank 32 zu verbessern. Diese Auswertung hat voraussichtlich durch technische Experten zu erfolgen, die zum Beispiel bei einer automatisch erzeugten Lösung 30 die zugrunde liegende Kundenanfrage 12 und einerseits deren Verarbeitung (Anfrageverarbeitungseinheit 22, Anfragedatenbasis 24) und andererseits die Verarbeitung (Basisdatenverarbeitungseinheit 44, Lösungsdatenbasis 46) der als zu der Kundenanfrage 12 passend ermittelten Basisanfrage 36 prüfen und ggf. Anpassungen der Verarbeitung vornehmen und/oder Verbesserungen der Verarbeitung veranlassen.

Das System 10, nämlich das System 10 zur automatischen Ver- und/oder Bearbeitung von Kundenanfragen 12 und zur Ausgabe von Lösungen 30/Antworten 18 auf eine Kundenanfrage 12 als Ergebnis der automatischen Ver- und/oder Bearbeitung, ist in Software implementiert, gegebenenfalls in verteilter Form, und die von dem System 10 umfasste Funktionalität (Anfrageverarbeitungseinheit 22, zentrale Verarbeitungsinstanz 26, Verteilinstanz 34, Basisdatenverarbeitungseinheit 44) und/oder die von dem System 10 benutzten Datenbasen 20, 24, 32, 42, 46 können einzeln oder zusammen zum Beispiel in der sogenannten Cloud verfügbar gemacht werden.

Die Darstellung in FIG 3 zeigt das System 10 als Computer 50, in dessen Speicher 52 ein Computerprogramm 54 mit der Funktionalität der Anfrageverarbeitungseinheit 22, der zentralen Verarbeitungsinstanz 26, der Verteilinstanz 34 und der Basisdatenverarbeitungseinheit 44 geladen ist. Das Computerprogramm 54 wird beim Betrieb des Systems 10 mittels einer von dem Computer 50 umfassten Verarbeitungseinheit in Form von oder nach Art eines Mikroprozessors 56 ausgeführt. Wie bereits erwähnt, kann die Funktionalität des Systems 10 auch verteilt implementiert sein. Dann umfasst das System 10 mehrere untereinander in an sich bekannter Art und Weise kommunikativ verbundene Computer 50, die mittels ihrer Verarbeitungseinheit jeweils einen Teil der Gesamtfunktionalität des Systems 10 ausführen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und ein nach dem Verfahren arbeitendes System 10 zur automatischen Verarbeitung einer Kundenanfrage 12. Im Rahmen des Verfahrens und beim Betrieb des Systems 10 werden zumindest die folgenden Schritte ausgeführt: (1) Die Kundenanfrage 12 wird in ein automatisch verarbeitbares Format konvertiert. (2) Bekannte Lösungen und diesen zugrunde liegende Anfragen werden ebenfalls in ein automatisch verarbeitbares Format konvertiert, bevorzugt vor der Konvertierung der Kundenanfrage 12 und/oder bevorzugt in einer wiederholt verwendbaren Form gesichert, also zum Beispiel in einer entsprechen Datenbank (Lösungsdatenbasis 46) gespeichert. (3) Zum Erhalt einer Antwort 18 auf die Kundenanfrage 12 wird mit der Kundenanfrage 12, und zwar in dem automatisch verarbeitbaren Format, nach einer passenden Anfrage gesucht, wobei die Suche ebenfalls in den automatisch verarbeitbaren Formaten der bekannten Anfragen erfolgt. Bei einer Übereinstimmung oder einer ausreichenden Übereinstimmung wird eine zu der ermittelten bekannten Anfrage gehörige bekannte Lösung als Basis für die Antwort 18 verwendet. Die hier vorgeschlagene Lösung ist ein Verfahren und ein System 10 zur vollautomatischen multisource-Klassifizierung von Serviceanfragen (Kundenanfragen 12) im industriellen Umfeld und zur Klassifizierung passender Servicelösungen inklusive korrespondierendem Mapping von Anfragen zu Lösungen. Um eine multisource-Klassifizierung handelt es sich deshalb, weil zumindest potentiell verschiedene Quellen genutzt werden und potentiell nutzbar sind. Bei einem Problem wird demnach zum Beispiel nicht nur ein möglicher Lösungsraum (Kunde hat Problem, Experte antwortet Kunde), sondern es werden vielmehr verschiedene Lösungsräume betrachtet, nämlich zum Beispiel zusätzlich ein Lösungsraum, in welchem sich für ein Problem eines Kunden bereits Lösungen oder Lösungsansätze anderer Kunden finden (zum Beispiel Internet-Forum). Die Mächtigkeit des hier vorgeschlagenen Ansatzes besteht damit vor allem auch darin, dass theoretisch alle denkbaren Quellen erfasst und klassifiziert sind oder durchsucht und klassifiziert werden.

## Patentansprüche

1. Verfahren zur automatischen Verarbeitung einer Kundenanfrage (12),
wobei die Kundenanfrage (12) in ein automatisch verarbeitbares Format konvertiert wird,
wobei bekannte Lösungen und einer bekannten Lösung zugrunde liegende Anfragen ebenfalls in ein automatisch verarbeitbares Format konvertiert werden, und
wobei zum Erhalt einer Antwort (18) auf die Kundenanfrage (12) mit der Kundenanfrage (12) in dem automatisch verarbeitbaren Format nach einer passenden Anfrage in den automatisch verarbeitbaren Formaten der bekannten Anfragen gesucht wird und bei einer Übereinstimmung oder einer ausreichenden Übereinstimmung eine zu der ermittelten bekannten Anfrage gehörige bekannte Lösung als Basis für die Antwort (18) verwendet wird.

2. Verfahren nach Anspruch 1,
wobei die Konvertierung der Kundenanfrage (12) in ein automatisch verarbeitbares Format und die Konvertierung einer bekannten Anfrage in ein automatisch verarbeitbares Format mit Funktionseinheiten (22, 44) eines Computerprogramms (54) erfolgt, denen dieselbe oder zumindest im Wesentlichen dieselbe Funktionalität zugrunde liegt.

3. Verfahren nach Anspruch 2, wobei die Funktionseinheiten (22, 44) des Computerprogramms (54), welche die Konvertierung der Kundenanfrage (12) und die Konvertierung einer bekannten Anfrage jeweils in ein automatisch verarbeitbares Format vornehmen, eine Gruppierung und Klassifizierung vornehmen.

4. System (10) zur automatischen Verarbeitung einer Kundenanfrage (12) mit Mitteln (22, 24, 26, 34, 44, 46, 54) zur Ausführung des Verfahrens nach einem der Ansprüche 1 bis 3.

5. Computerprogramm (54) mit Programmcodemitteln, um alle Schritte von jedem beliebigen der Ansprüche 1 bis 3 durchzuführen, wenn das Computerprogramm (54) beim Betrieb eines Computers (50) in einen von dem Computer (50) umfassten Speicher (52) geladen und mittels eines von dem Computer (50) umfassten Mikroprozessors (56) ausgeführt wird.

6. Computerprogrammprodukt mit Programmcodemitteln, die auf einem computerlesbaren Datenträger gespeichert sind, um das Verfahren nach jedem beliebigen der Ansprüche 1 bis 3 durchzuführen, wenn das Computerprogramm (54) beim Betrieb eines Computers (50) in einen von dem Computer (50) umfassten Speicher (52) geladen und mittels eines von dem Computer (50) umfassten Mikroprozessors (56) ausgeführt wird.

7. System (10) nach Anspruch 4, mit zumindest einem Computer (50), in dessen Speicher (52) ein Computerprogramm (54) nach Anspruch 5 geladen ist.
